# FASCICULE DE BREVET EUROPEEN

(11) **EP 0 521 778 B1**
(45) Date de publication et mention de la délivrance du brevet: **27.12.1996**
(21) Numéro de dépôt: 92401868.2
(22) Date de dépôt: 30.06.1992
(51) Int. Cl.: G06K 19/06

(54) **Fabrication de cartes à puce à module autodétachable**
Herstellung von Chipkarten mit selbstlösbarem Modull
Manufacture of chip cards with self-detachable module

(30) Priorité: 02.07.1991 FR 9108248
(43) Date de publication de la demande: 07.01.1993
(73) Titulaire: GEMPLUS CARD INTERNATIONAL, F-13420 Gemenos (FR)
(72) Inventeur: Coiton, Gérard, F-75116 Paris (FR); Farrugia, Augustin, F-75116 Paris (FR)
(74) Mandataire: Schmit, Christian Norbert Marie

(56) Documents cités:
- EP-A- 0 163 880
- FR-A- 2 538 930
- FR-A- 2 595 848
- FR-A- 2 622 323

## Description

L'invention concerne les cartes à microcircuit électronique, plus généralement connues sous le nom de cartes à puces.

Un des problèmes qu'on rencontre fréquemment pour les produits de très grande diffusion est celui de la normalisation pour que des produits émanant de plusieurs constructeurs différents puissent être utilisés dans les mêmes appareils.

C'est le cas en particulier des cartes à puces : elles sont utilisées par exemple dans les appareils téléphoniques publics, dans des lecteurs de cartes associés à des ordinateurs personnels, dans des applications bancaires, etc. Il a donc fallu adopter des normes précises de construction que tous les constructeurs doivent respecter. Le grand public connaît maintenant très bien le format qui a été adopté, au moins en ce qui concerne les dimensions extérieures de la carte : c'est le format des cartes de crédit classiques à pistes magnétiques; la carte à puce est un rectangle d'environ 8,5 cm de long sur 5,4 cm de large et un peu moins d'un millimètre d'épaisseur (normes internationales IS 7816-1 et 7816-2 aujourd'hui).

Il en résulte bien entendu que les machines de fabrication de cartes à puces sont construites en fonction de ces normes, pour pouvoir produire des cartes qui respectent les normes.

Mais dans certaines applications, on s'aperçoit que ce format n'est pas idéal. C'est le cas en particulier pour des applications miniaturisées. Par exemple, lorsqu'une carte à puce doit être utilisée dans un boîtier portatif de très petites dimensions, il n'est pas certain que le format actuel, malgré sa petite taille, reste acceptable. A titre d'exemple, on peut citer le radiotéléphone numérique futur, dont le boîtier portatif devrait utiliser des cartes à puces de format beaucoup plus petit que le format actuel.

L'invention vise à proposer une solution technique économique pour réaliser des cartes à puces de format plus petit que le format généralement utilisé.

Selon l'invention on propose de réaliser les cartes à puces au format standard le plus courant, et de les découper ensuite.

De manière particulièrement avantageuse, on propose que les cartes au format standard soient pourvues d'une prédécoupe locale partielle aux dimensions désirées autour du microcircuit contenu dans la carte.

Cette prédécoupe partielle permet notamment de détacher de la carte de dimensions standard une carte de dimensions réduites prédéterminées.

Le détachement est fait seulement après la fin de toutes les opérations de fabrication, de test, et de personnalisation imprimée, de sorte que l'on peut utiliser tous les appareils standard de fabrication et de test sans aucune contrainte due aux dimensions réduites désirées pour la carte finale.

Par conséquent, le coût de fabrication est réduit puisqu'il n'est pas nécessaire d'investir dans des équipements de fabrication supplémentaires coûteux, uniquement à cause de ces problèmes de dimensions.

Un autre avantage important de la prédécoupe faite autour du micromodule existe également dans le cas où la partie prédécoupée n'est pas détachée : la carte reste au format standard. Dans ce cas, la partie intérieure à la prédécoupe, celle qui contient le micromodule électronique, est mécaniquement découplée de la carte, c'est-à-dire qu'elle subit beaucoup moins les contraintes de flexion et de torsion dues à la manipulation de la carte.

La prédécoupe peut être un amincissement de l'épaisseur de la carte sur tout le pourtour de la carte au format réduit. Ce peut être aussi une découpe sur toute l'épaisseur en laissant de place en place de petites régions non découpées qui forment des ponts entre la carte de format réduit et le reste de la carte au format standard. Ces ponts assurent le maintien de la carte au format réduit dans la carte au format normal jusqu'au détachement final.

La description détaillée de l'invention est faite en référence aux dessins annexés dans lesquels :
- la figure 1 représente une carte à puce au format standard actuel pour la majorité des applications;
- la figure 2 représente le principe de l'invention pour la réalisation d'une carte de format réduit;
- la figure 3 représente la carte terminée;
- la figure 4 représente, en vue agrandie, un exemple de prédécoupe par fente interrompue laissant subsister des ponts de matière.

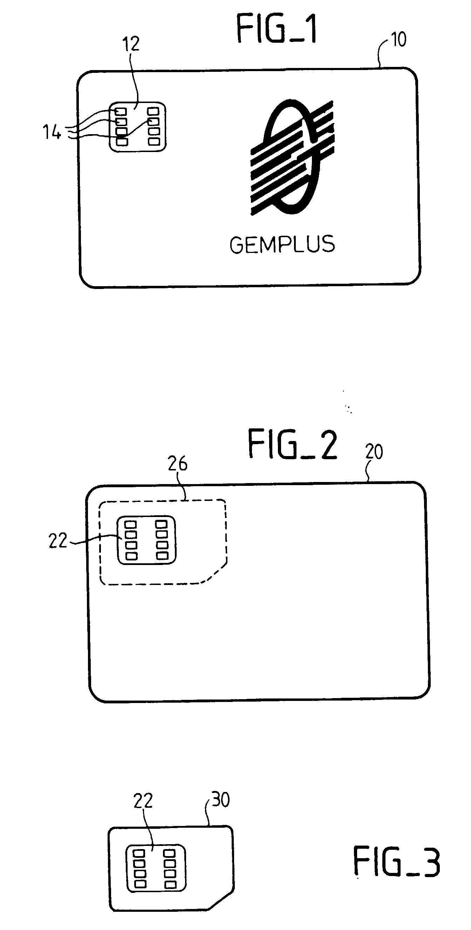

A la figure 1, on voit une carte à puce 10 très classique, ayant un format standard rectangulaire plat : longueur 8,5 cm; largeur 5,4 cm, épaisseur inférieure à 1 millimètre. Le micromodule électronique 12 qui forme le coeur de la carte est placé dans le coin en haut à gauche. Les contacts d'accès 14 à ce micromodule affleurent à la surface de la carte. En dehors de la zone d'affleurement, le reste de la carte peut servir à des inscriptions personnalisées pour le fournisseur de service ou pour l'utilisateur, de même d'ailleurs que la face arrière de la carte.

La figure 2 représente la mise en oeuvre de l'invention : à partir d'une carte au format standard 20 identique à celle de la figure 1, on effectue tout le processus de fabrication, y compris le test du micromodule 22 (une fois que celui-ci a été mis en place dans la carte avec des contacts affleurants), et la personnalisation des surfaces de la carte par impression de textes et de graphiques.

Mais la carte finale sera beaucoup plus petite et son contour est représenté à la figure 2 par une ligne pointillée 26 entourant le micromodule 22. La carte sera découpée le long de la ligne 26.

Plusieurs procédés peuvent- être utilisés et la découpe peut se faire à divers 'moments de la fabrication. Elle pourrait par exemple se faire directement en une fois à la fin de la fabrication.

On préfère selon l'invention effectuer à un stade intermédiaire une prédécoupe partielle et non une découpe totale. C'est seulement au stade de l'envoi chez l'utilisateur, ou même chez l'utilisateur au moment de l'insertion dans un lecteur au standard de format réduit, que la carte au format réduit sera détachée de la carte au format standard par simple pression.

La figure 3 représente la carte de format réduit 30 finalement obtenue.

La prédécoupe partielle peut être effectuée de plusieurs manières différentes. Elle consiste à fragiliser le pourtour de la ligne 26 de manière qu'une simple pression des doigts entre la zone de carte 30 et la zone de carte 20 restante permette de détacher la carte 30.

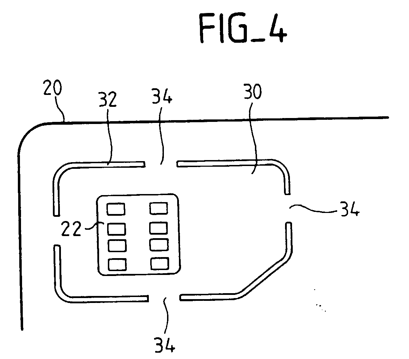

A la figure 4 on a représenté une prédécoupe consistant en une fente 32 sur toute l'épaisseur de la carte; cette fente s'étend sur le pourtour de la ligne 26 qui définit le pourtour de la carte 30, sauf à certains endroits de la ligne 26 où la fente est interrompue et laisse des ponts 34 reliant la carte 30 au reste de la carte 20. Ces ponts 34 sont eux-mêmes d'épaisseur plus faible que la carte de format réduit pour permettre la séparation de celle-ci et du corps de carte de format standard.

On comprendra qu'avec une réalisation telle que celle de la figure 4 tout particulièrement, si le nombre de ponts 34 est faible (par exemple 4 comme cela est représenté), on aboutit à un bon découplage mécanique entre la carte 20 et la carte 30; il est tout-à-fait intéressant de profiter de ce découplage même dans le cas où les cartes restent au format standard, pour obtenir une carte à puce moins sensible aux flexions et aux torsions dues à des conditions d'utilisation et de stockage sévères chez l'utilisateur final.

## Revendications

1. Procédé de réalisation de cartes à puce de format réduit, caractérisé en ce qu'il consiste à effectuer la totalité du procédé de fabrication d'une carte à puce de format standard (20), comprenant en outre une étape de formation d'une prédécoupe partielle (26) aux dimensions désirées de cette carte à puce de format réduit autour d'un micromodule (22) de la carte de format standard, afin de définir la zone de format plus petit que le format standard destinée à être séparée du reste de la carte de format standard (20) par une simple pression des doigts entre la zone de la carte de format standard correspondant à la carte de format réduit (30) et la zone restante de la carte (20) de format standard.

2. Procédé selon la revendication 1, caractérisé en ce que la prédécoupe partielle est constituée par une fente (32) le long du pourtour de la carte de format réduit (30), cette fente étant interrompue localement pour laisser de place en place des ponts (34) entre la carte de format réduit (30) et le reste de la carte de format standard (20), ces ponts étant affaiblis en épaisseur au niveau de la carte de format réduit pour permettre la séparation de celle-ci et du corps de carte de format standard en exerçant une simple pression des doigts.

## Claims

1. Method of producing small-format chip cards, characterised in that it consists in the entire process used to manufacture a standard-format chip card (20), incorporating an additional step whereby a partially pre-cut line (26) of the desired dimensions of the small-format chip card is formed around a micro-module (22) of the standard-format card, so as to define the zone that is of a smaller format than the standard format, designed to be separated from the remainder of the standard-format card (20) by dint of light pressure exerted by the fingers between the zone of the standard-format card corresponding to the small-format zone (30) and the remaining zone of the standard-format card (20).

2. Method as claimed in claim 1, characterised in that the partially pre-cut line is a slit (32) along the periphery of the small-format card (30), this slit being interrupted at intermittent points so as to leave bridges (34) at certain points between the small-format card (30) and the remainder of the standard-format card (20), these bridges being of a lesser thickness at the level of the small-format card to allow it to be separated from the body of the standard-format card by exerting a light pressure with the fingers.

## Patentansprüche

1. Verfahren zur Herstellung von Chipkarten mit verkleinertem Format, dadurch gekennzeichnet, daß ein Verfahren zur Herstellung einer Chipkarte mit Standardformat (20) vollständig durchgeführt wird, unter anderen umfassend einen Schritt zur Bildung eines Teileinsatzes (26) mit den gewünschten Dimensionen dieser Chipkarte mit verkleinertem Format um ein Mikromodul (22) der Karte mit Standardformat, um eine Zone mit gegenüber dem Standardformat verkleinertem Format zu definieren, dazu bestimmt, daß sie vom Rest der Karte mit Standardformat (20) durch einfachen Druck mit den Fingern auf die Zone der Karte mit Standardformat, die mit der Karte mit reduziertem Format (30) zusammenhängt, gegenüber der übrigen Zone der Karte (20) mit Standardformat trennbar ist.

2. Verfahren nach Anspruch 1, dadurch gekennzeichnet, daß der Teileinsatz durch einen Spalt (32) entlang dem Umfang der Karte mit verkleinertem Format (30) erzeugt wird, wobei dieser Spalt lokal unterbrochen ist, um stellenweise Brücken (34) zwischen der Karte mit verkleinertem Format (30) und dem Rest der Karte mit Standardformat (20) stehen zu lassen, wobei diese Brücken in ihrer Dicke auf Höhe der Karte mit verkleinertem Format abnehmen, um die Trennung dieser von dem Körper der Karte mit Standardformat durch Ausübung eines einfachen Druckes mit den Fingern zu ermöglichen.
